# EUROPEAN PATENT APPLICATION

(11) **EP 4 825 534 A1**
(43) Date of publication of application: **21.10.2026**
(21) Application number: 26172495.9
(22) Date of filing: 15.04.2026
(51) Int. Cl.: B25H 5/00

(54) **VEHICLE SERVICE APPARATUS**

(30) Priority: 18.04.2025 IT 202500008880
(71) Applicant: NEXION S.p.A., 42015 Correggio (RE) (IT)
(72) Inventor: PESARESI, Andrea, 42015 CORREGGIO (REGGIO EMILIA) (IT)
(74) Representative: Conti, Marco

(57) **Abstract**

A service apparatus (1) for a vehicle (9) positioned in a working area (8) comprises a structure (2) configured to assist a user in performing service operations on the vehicle (9), and has a first face (21) and a second face (22), opposite the first face (21) relative to an operating direction (O); the apparatus comprises a base unit (3), which supports the structure (2), and a plurality of wheels (4) associated with the base unit (3) to form therewith a trolley which is movable on a floor; one or more of the plurality of wheels (4) are rotatable about a respective horizontal axis (X), so as to roll on the floor, and are movable by rotation about a respective vertical axis (Z), to be pivotable relative to the base (3) so that the trolley can move in any direction parallel to the floor; the apparatus further comprises a locking device (6) configured to lock said one or more pivoting wheels to stop their rotational motion about the respective vertical axes (Z) so they are constrained to roll on the floor along the operating direction (O) and so that the trolley can move only along the operating direction (O).

## Description

This invention relates to a vehicle service apparatus. The invention which is the object of this disclosure is applicable to one or more devices configured to interact with a vehicle positioned in a working zone, for example, a vehicle in a repair shop. Considered as "devices configured to interact with a vehicle" are vehicle wheel alignment systems, headlight testing systems (or "headlight aligners"), ADAS sensor calibration systems, or integrated systems which perform one more between the wheel alignment, ADAS calibration and headlight testing functions. This invention can also be applied, in the automotive context, in other solutions involving interaction between a vehicle and a vehicle service structure which needs to be placed at a predetermined position relative to the vehicle. Furthermore, this invention can be applied in contexts where a structure needs to be moved in a space such as, for example, a repair shop. By "structure" is meant a generic device configured to assist the user to perform operations involving maintenance, configuration or calibration of a vehicle or specific vehicle component (for example, tyre changing machines or balancing machines can also be considered as service structures). In such applications, there is a need for the vehicle service apparatus to be moved in such a way that it can be placed at a specific position relative to the vehicle, depending on specifications laid down by the vehicle manufacturer. For example, in the case of an ADAS calibration system, the calibrating apparatus is provided with a calibration panel positioned fixedly, at a predetermined distance and orientation relative to the vehicle, so as to be able to calibrate the ADAS sensor correctly. Usually, a first approximate movement of the service apparatus is carried out manually by the user who moves the system towards (or away from) the vehicle. The first movement to the initial position has the purpose of positioning the structure approximately and this movement ends with the structure locked at a position defining a fixed reference, at the desired calibrating position. In some applications, the first movement is followed by further, smaller and more precise movements of limited extent and angle (that is, in rotation). During the finer adjustments, a particular component of the calibration assistance system (for example, only the ADAS calibration panel) can be positioned to a high degree of precision, while the structure remains fixed to the floor. As regards the first movement, that is, the movement of the apparatus on a level surface, applications such as those of documents EP3875895B1 and EP3628996B1 (in the name of the present Applicant) are known. In those documents, the vehicle service system is provided with a base unit and wheels to form a carriage. The wheels allow the carriage to move freely on the floor horizontally. Those documents describe the possibility of allowing the user to lock the base unit to the floor by means of feet or pins. Moreover, in some operations carried out by the vehicle service apparatus, it may be necessary to move the apparatus linearly in translation relative to the vehicle. In these cases, therefore, the apparatus must be able to move freely on the floor horizontally at some times, and to move linearly at other times. The linear movement of the apparatus may be carried out during the first movement. In these cases, during the first movement, there is also the need for the structure to be moved as follows:
- performing a first movement, in which the structure is free to move horizontally in any direction;
- performing a second movement, in which the structure is movable linearly along any rectilinear operating direction. Typically, the rectilinear direction may be longitudinal relative to the vehicle, for example, in the case where the system is moved towards and/or away from the vehicle, or transverse. where the system is moved in a direction perpendicular to the longitudinal axis of the vehicle.

In other words, if we consider a plane in which two orthogonal directions, x and y, are defined, the structure, in the first movement, is movable both along x and along y. Locking the base unit to the floor fixes a first coordinate (for example, along x). During the second movement, the coordinate along x must remain fixed while the system is moved along y, for example, towards and/or away from the vehicle. In the prior art solutions in this field, the first movement can be performed by providing the base unit of the system with pivoting wheels. For example, trolleys with four pivoting wheels are commonly used. Each wheel, being pivotable, has its own vertical axis about which it can rotate freely through 360°. Thus, when the user pushes the base unit in a certain direction, the pivoting wheels rotate and align along that direction and follow the pushing action of the user. However, since the wheels are free to rotate, that is to say, since they are not constrained in any way, they cannot always move precisely exclusively along a straight line. That is the case, for example, when the direction of movement of the structure is changed. When the structure is moved in the opposite direction, the wheels rotate through 180° about the axis perpendicular to the floor. The change of direction occurs, for example, during the second movement. Therefore, during the second movement, the wheels can also modify the coordinate along the direction x of the service system.

The aim of this disclosure is to provide a vehicle service apparatus that overcomes the above mentioned disadvantages of the prior art.

In particular, the aim of this disclosure is to provide a wheel service apparatus which is capable of being movable alternatively in a horizontal plane in any direction or movable in a constrained manner along a rectilinear direction.

Another aim of the invention is to provide an apparatus which is simple and reliable, as well as flexible and adaptable to different vehicle service structures.

This aim is fully achieved by the vehicle service apparatus of this disclosure as characterized in the appended claims.

In particular, this disclosure provides a service apparatus for a vehicle positioned in a working area. The apparatus comprises a structure. The structure is configured to assist the user with vehicle service operations.

As stated above, the term "vehicle service structure" is used to mean a device which is configured to assist the user with operations involving maintenance, configuration or calibration of a vehicle or a specific vehicle component. The structure has a first face. In an example, the first face is operatively directed towards the vehicle. The structure has a second face. The second face is opposite the first face relative to an operating direction. The operating direction may be a longitudinal direction. The longitudinal direction is a direction towards and away from the vehicle. Alternatively, the operating direction may be a transverse direction. The transverse direction is a direction perpendicular to the longitudinal direction. It should be noted, therefore, that the transversal direction is not a direction towards and away from the vehicle but is a direction perpendicular to a longitudinal axis of symmetry of the vehicle. The apparatus comprises a base unit. The base unit supports the structure. In an example, the structure includes a vertical post. The vertical post is connected to the base unit. The vertical post protrudes vertically from the base unit.

The apparatus comprises a plurality of wheels. The wheels of the plurality of wheel are associated with the base unit to form therewith a trolley which is movable on a floor. The wheels of the plurality of wheel are rotatable about a respective horizontal axis to roll on the floor. One or more of the plurality of wheels are further movable by rotation about a respective vertical axis, that is, an axis perpendicular to the base unit or to the floor (which is usually horizontal) so they are pivotable relative to the base unit. The vertical post is parallel to the vertical axis. That way, the trolley is movable in any direction parallel to the floor surface on which the trolley moves. The apparatus comprises a locking device. The locking device is configured to lock the one or more pivoting wheels to stop their rotational motion about the respective vertical axes. For example, the wheels may be locked and aligned along the operating direction. That way, the one or more pivoting wheels may be constrained to roll on the floor along the operating direction, so as to make the trolley movable along the operating direction only. Such a solution allows the wheel to be fixedly constrained relative to the vertical axis so that they are oriented along the operating direction and constrained to move as if they were on a rail. This is particularly advantageous because it increases the precision of movement of the structure, thus increasing the efficiency of the vehicle service structure.

In an example, the apparatus comprises one or more feet. Each foot of the one or more feet is connected to a respective wheel of the one or more pivoting wheels. Each foot comprises a first portion. The first portion is hinged to the base unit to rotate about the vertical axis. Each foot comprises a second portion. The second portion is connected to the wheel to allow the wheel to rotate about the respective horizontal axis. The horizontal axis is spaced from the vertical axis. Thus, as the foot rotates about the vertical axis, the centre of the wheel describes a circle about the vertical axis.

It should be noted that the fact that the horizontal axis is spaced from the vertical axis (that is to say, the fact that the wheel is eccentric), allows the wheel to rotate in an optimal manner about the vertical axis. Furthermore, locking the second portion (in practice, the eccentric portion) makes the mechanical locking action quicker and easier. In effect, locking the first portion would be more complicated but the second portion, being eccentric, presents a "cantilevered" portion which is optimal to lock.

In an example, the locking device is configured to act on the second portion of the foot. It should be noted that the fact that the horizontal axis is spaced from the vertical axis (substantially meaning that the wheel is eccentric) allows the rotational (pivoting) movement about the vertical axis to be performed in optimal manner. These solutions allow making the trolley even more particularly practical and easy to move. In an example, each of the one or more feet is movable between an internally aligned position and an externally aligned position. The internally aligned position and the externally aligned position are opposite each other relative to the operating direction. The internally aligned position is proximal to a centre of the base unit and the externally aligned position is distal to the centre of the base unit. In an example, the locking device is configured to lock the foot at the internally aligned position or at the externally aligned position. This solution is particularly convenient because it allows the foot to be locked at two opposite positions, substantially at 180° from each other along the operating direction. In effect, when the trolley is moved forwards or backwards along the operating direction, the pivoting wheels tend to adopt a position between the internally aligned position and the externally aligned position. Thus, when the trolley is stopped after being moved along the operating direction, the wheels are easy to lock at the internally aligned position and/or at the externally aligned position, since they are already aligned at one of these positions.

In an example, the plurality of wheels includes a first pair of wheels. The first pair of wheels is located at the first face. The plurality of wheels may include a second pair of wheels. The second pair of wheels is located at the second face. Preferably, for each wheel, the locking device is configured to lock the foot at the internally aligned position. In an example, the first pair of wheels is located at the first face of the structure and is proximal to the vehicle. The second pair of wheels is located at the second face of the structure and is distal to the vehicle. Locking the foot at the internally aligned position is particularly advantageous because it allows minimizing trolley dimensions and makes using the locking device very practical. In an example, the locking device is configured to lock each wheel selectively. That way, each wheel can be locked independently of the other wheels.

In an example, the locking device comprises a plurality of pins. In this example, each pin is movable between a locked position and an unlocked position. At the locked position, the pin is configured to act on the second portion of the foot to lock the wheel.

The pin is a quick and practical way of locking the wheel to stop it rotating by mechanically obstructing the rotation of the foot of the wheel.

In an example, the second portion of the foot comprises a protrusion. The protrusion comprises a seat. At the locked position, the pin is configured to be inserted vertically into the seat. The seat acts as a mechanical stop for the pin. Thus, locking the pin against the seat prevents the wheel from rotating.

In an example, the base unit comprises a plurality of openings. Each pin comprises an upper portion and a lower portion. The lower portion includes a central tooth. The lower portion includes a lateral shoulder. Each pin is insertable vertically into a respective opening in the base unit. For example, an opening in the base unit may be a hole into which the pin is insertable vertically. That way, the central tooth goes into the seat and the lateral shoulder abuts against the protrusion. It should be noted that in this example, the protrusion acts as an abutment for the pin and stops the vertical movement of the pin. Thus, the pin is inserted vertically, comes into abutment against the protrusion and is mechanically coupled to the seat, preventing the foot from rotating.

In another example, the protrusion comprises a lateral portion. The lateral portion is inclined downwards. The pin is configured to slide on the protrusion so as to move between the locked position and the unlocked position.

In an example, the pin is movable between an unlocked position, a locked position and an engaged position. At the unlocked position, the pin is disengaged from the foot. For example, the pin may be separated from the trolley, that is, lifted and left aside. At the locked position, the pin is configured to effectively lock the foot. At the engaged position, the pin is connected to the trolley and is configured to come into contact with the lateral portion of the protrusion of the foot. In this example, the lateral portion, as it rotates while the trolley is moving, meets the pin and forces the pin to slide on it, upwards until the pin is aligned with the respective hole.

In an example, the vehicle service structure comprises a manoeuvring means. The manoeuvring means is configured to be gripped by a user, manually for example, to move the structure by making it run on the wheels of the trolley. The manoeuvring means may include a frame and/or gripping elements. In an example, the locking device is connected to a connecting device. Preferably, the pins are connected to the connecting device. In an example, the connecting device is operable manually. The connecting device is configured to lower and/or lift the pins, moving them between the locked position and the unlocked position. In an example, the connecting device comprises a handle. Alternatively, or in combination, the connecting device may comprise a lever and/or a slider and/or a knob. The connecting device may comprise a cable and/or a hydraulic circuit, connecting the handle to the pins. In an example, the connecting device is movable between a first position, where the pins are engaged to lock the wheel, and a second position, where the pins are disengaged and do not lock the wheel. Preferably, the connecting device is connected to the structure. Still more preferably, the connecting device is connected to the manoeuvring means. That way, the user can operate the connecting device from a convenient position, that is to say, from an operating position which the user normally adopts to move the structure. For example, while the user moves the structure (that is, with hands on the manoeuvring means) the connecting device can be quickly and easily operated so that the pins can be engaged with or disengaged from the wheels. In an example, the connecting device comprises two handles and/or two levers, each grippable by the user with a respective hand.

In an example, the structure comprises one or more of the following vehicle service systems:
- a system for measuring vehicle alignment;
- an ADAS calibration system;
- a headlight testing system.

In an example, the structure comprises an assisting device. The assisting device may be, for example, for the system for measuring vehicle alignment, an horizontal bar provided with two cameras. The assisting device may be, for example, for the ADAS calibration system, a calibration panel or a radar calibration mirror. The assisting device may be, for example, for the headlight testing system, an optic group.

In an example, the assisting device is connected to the vertical post. The assisting device is configured to slide on the vertical post to move along the vertical direction. In an example, the assisting device may include a carriage, for facilitating the sliding on the vertical post. The vertical translation of the assisting device guarantees flexibility to the service apparatus, allowing the user to correctly calibrate and/or positioning the assisting device with respect to the wheels of the vehicle, or the ADAS sensor or the headlights.

According to an aspect of it, this disclosure provides a method for positioning a vehicle service apparatus. Preferably, the vehicle is positioned in a working area. The method comprises a step of providing a structure. The structure has a first face. The structure has a second face. The second face is opposite the first face relative to an operating direction. The method comprises a step of providing a base unit. The base unit supports the structure. The method comprises a step of providing a plurality of wheels. The wheels are associated with the base unit to form therewith a trolley which is movable on a floor. The wheels of the plurality are rotatable about a respective horizontal axis to roll on the floor. One or more of the plurality of wheels are movable by rotation about a respective vertical axis, that is, an axis perpendicular to the base unit or to the floor, to be pivotable relative to the base unit so that the trolley can move in any direction parallel to the floor. The method comprises a step, via a locking device, of locking the pivoting wheels to stop their rotational motion about the respective vertical axes. That way, the wheels are constrained to roll on the floor along the operating direction. The method comprises a step of moving the apparatus along the operating direction, with the pivoting wheels locked, so that the trolley is movable only along the operating direction. In an example, the apparatus comprises one or more feet. Each foot of the one or more feet is connected to a respective wheel of the one or more pivoting wheels. Each of the one or more feet comprises a first portion. The first portion is hinged to the base unit to rotate about the vertical axis, perpendicular to the base unit. Each of the one or more feet comprises a second portion. The second portion is connected to the wheel to rotate about a horizontal axis. The horizontal axis is spaced from the vertical axis so that during rotation about the vertical axis, the centre of the wheel describes a circle about the vertical axis. In an example, in the step of locking, the locking device acts on the second portion of the foot of at least one wheel. In an example, in the step of locking, the locking device acts on the second portion of the foot of two wheels. In an example, at least one of the plurality of feet is movable between an internally aligned position and an externally aligned position. The internally aligned position and the externally aligned position are positions opposite each other relative to the operating direction. The internally aligned position is proximal to a centre of the base unit. The externally aligned position is distal to the centre of the base unit. In this example, in the step of locking, the locking device locks the foot at the internally aligned position. In an example, the apparatus comprises a first pair of wheels and/or a second pair of wheels. The method comprises a first step of moving the apparatus along the operating direction in a first sense. For example, the first sense may be towards or away from the vehicle. Preferably, the first sense is directed from the first face to the second face. Alternatively, the first sense is directed from the second face to the first face. The method comprises a step of locking the wheels of the one whose feet, between those of the pair of front wheels and those of the pair of rear wheels, are at the internally aligned position. In an example, the method comprises a second step of moving the apparatus along the operating direction in a second sense, opposite of the first sense. It should be noted that in the embodiment in which the trolley has only two pivoting wheels, there is no second step of moving. The method comprises a step of locking the wheels of the other pair of wheels whose feet, between those of the first pair of wheels and those of the second pair of wheels, have also adopted the internally aligned position. This movement is particularly advantageous because it allows the user to orient the wheels easily along the operating direction in just a few movements. In an example, for each wheel to be locked, locking includes inserting a pin into a through opening made in the base unit. That way, when the pin is at a locked position, a lower portion of the pin interacts with and locks the second portion of the corresponding foot. In this example, there is a step of unlocking by extracting the pin from the opening.

These and other features are more apparent from the following description of a preferred embodiment, illustrated by way of non-limiting example in the accompanying drawings, in which:

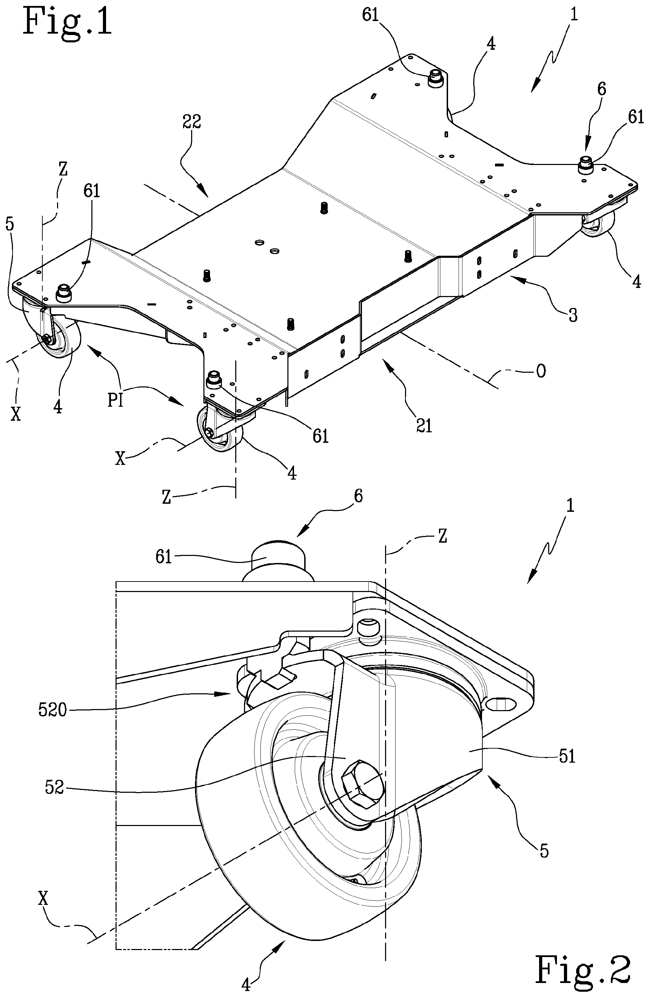

- Figure 1 shows a vehicle service apparatus;
- Figure 2 shows a detail of a pivoting wheel of the vehicle service apparatus;

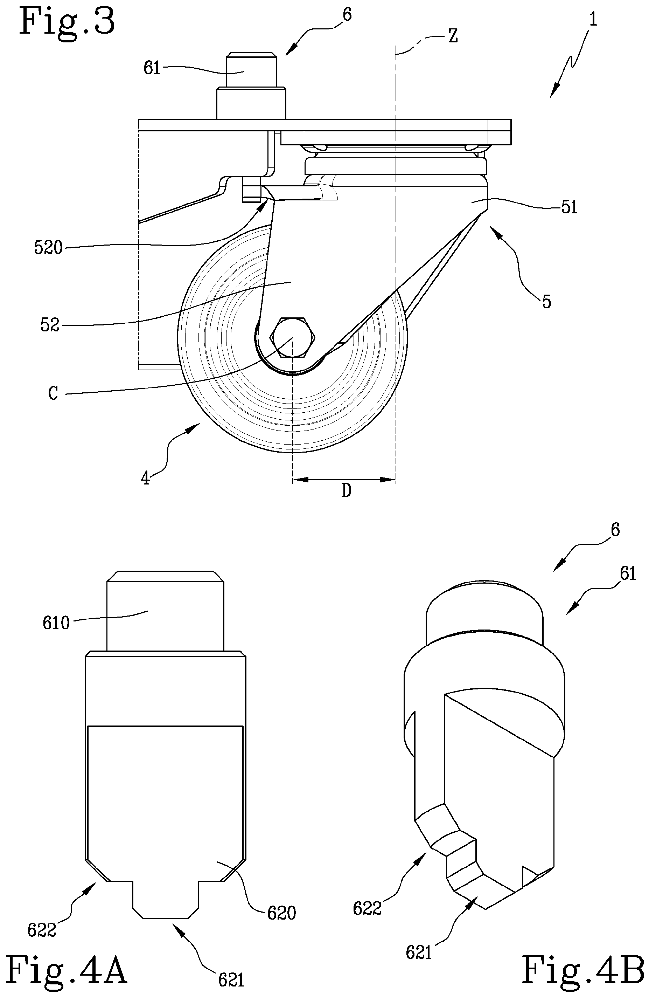

- Figure 3 shows a side view of the pivoting wheel;
- Figures 4A and 4B show a locking device;
- Figure 5 shows a type of vehicle service apparatus in which the trolley supports an ADAS calibration system;

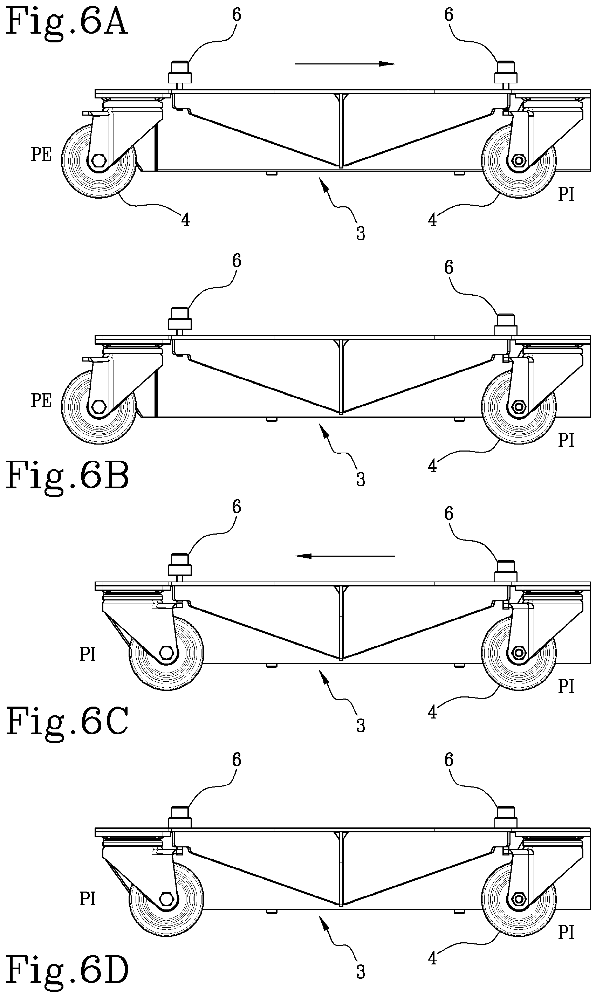

- Figure 6A, 6B, 6C and 6D show a sequence of moving and locking the trolley wheels;
- Figures 7A, 7B and 8 show a type of vehicle service apparatus in which the trolley supports a headlight testing system and a vehicle alignment system;
- Figure 9 shows a particular type of trolley with 3 wheels, of which one is a pivoting wheel.

The numeral 1 in the drawings denotes a service apparatus for a vehicle 9 positioned in a working area 8. The apparatus comprises a structure 2 configured to assist the user with service operations to be carried out on the vehicle 9. The structure 2 has a first face 21 and a second face 22. The second face 22 is opposite the first face 21 relative to an operating direction O. In an example, the first face 21 is directed towards the vehicle 9. The operating direction O may be a longitudinal direction. The longitudinal direction may be parallel to the longitudinal direction of the vehicle, for example, its axis of symmetry, or its thrust axis. The longitudinal direction may be a direction towards and away from the vehicle 9. The operating direction O may be a longitudinal direction or it may be a transverse direction. The transverse direction is a direction perpendicular to the longitudinal direction. The apparatus 1 comprises a base unit 3 which supports the structure 2. The apparatus 1 comprises a plurality of wheels 4. The wheels 4 of the plurality of wheel are associated with the base unit 3 to form therewith a trolley which is movable on a floor. One or more of the plurality of wheels 4 are rotatable about a respective horizontal axis X, so as to roll on the floor, and are movable by rotation about a respective vertical axis Z, to be pivotable relative to the base unit 3. Preferably, each of the plurality of wheels is movable by rotation about the axis Z. The apparatus 1 comprises a locking device 6, configured to lock the one or more pivoting wheels 4 to stop their rotational motion about the respective vertical axes Z. That way, the one or more pivoting wheels 4 are constrained to roll on the floor along the operating direction O so the trolley can move only along the operating direction O. In an example, the apparatus 1 comprises one or more feet 5. Each foot 5 of the one or more feet is connected to a respective wheel 4 of the one or more pivoting wheels. Each foot 5 comprises a first portion 51, hinged to the base unit 3 to rotate about the vertical axis Z. Each foot 5 comprises a second portion 52, connected to the wheel 4 so the wheel can rotate about the horizontal axis X. The horizontal axis X is spaced from the vertical axis by a distance D. Thus, as the foot 5 rotates about the vertical axis Z, the centre of the wheel 4 describes a circle about the vertical axis Z. In an example, the locking device 6 is configured to act on the second portion 52 of the foot 5. In an example, each of the one or more feet 5 is movable between an internally aligned position PI and an externally aligned position PE. The internally aligned position PI and the externally aligned position PE are opposite each other relative to the operating direction O. The internally aligned position PI is proximal to a centre of the base unit 3 and the externally aligned position PE is distal to the centre of the base unit 3. In other words, at the internally aligned position, the wheels 4 are directed towards the inside of the base unit 3, that is to say, the second portion 52 is close to a centre of the base unit 3, while the first portion 51 is further way from the centre of the base unit 3 than the second portion 52. At the externally aligned position PE, the wheels 4 are directed towards the outside of the base unit 3, that is to say, the second portion 52 is far from a centre of the base unit 3, while the first portion 51 is closer to the centre of the base unit 3 than the second portion 52. In an example, the locking device 6 is configured to lock the foot 5 at the internally aligned position PI or at the externally aligned position PE. In an example, the plurality of wheels 4 includes a first pair of wheels, located at the first face 21. The plurality of wheels 4 may include a second pair of wheels, located at the second face 22. Preferably, the apparatus 1 comprises four wheels 4, each one a pivoting wheel. Alternatively, the apparatus 1 comprises three wheels 4, each one a pivoting wheel. In another example, the apparatus 1 comprises a pair of pivoting wheels 4. In a further example, the apparatus 1 comprises three pivoting wheels 4. It should be noted that, preferably, a trolley with three pivoting wheels is associated with the supporting structure of a headlight testing system or headlight aligner. Preferably, the pair of pivoting wheels 4 is positioned at a face of the apparatus or along the operating direction O. In a further example, the apparatus 1 comprises only one pivoting wheel 4.

Preferably, for each wheel, the locking device 6 is configured to lock the foot 5 at the internally aligned position PI. In an example, the first pair of wheels 4 is located at the first face 21 of the structure 2 and is proximal to the vehicle 9. The second pair of wheels 4 is located at the second face 22 of the structure 2 and is distal to the vehicle. This configuration applies, for example, to ADAS calibration systems or to vehicle wheel alignment systems. This configuration may also apply to systems in which the operating direction O is a direction towards and/or away from the vehicle 9. In an example, the locking device 6 is configured to lock each wheel 4 selectively. That way, each wheel 4 can be locked independently of the other wheels.

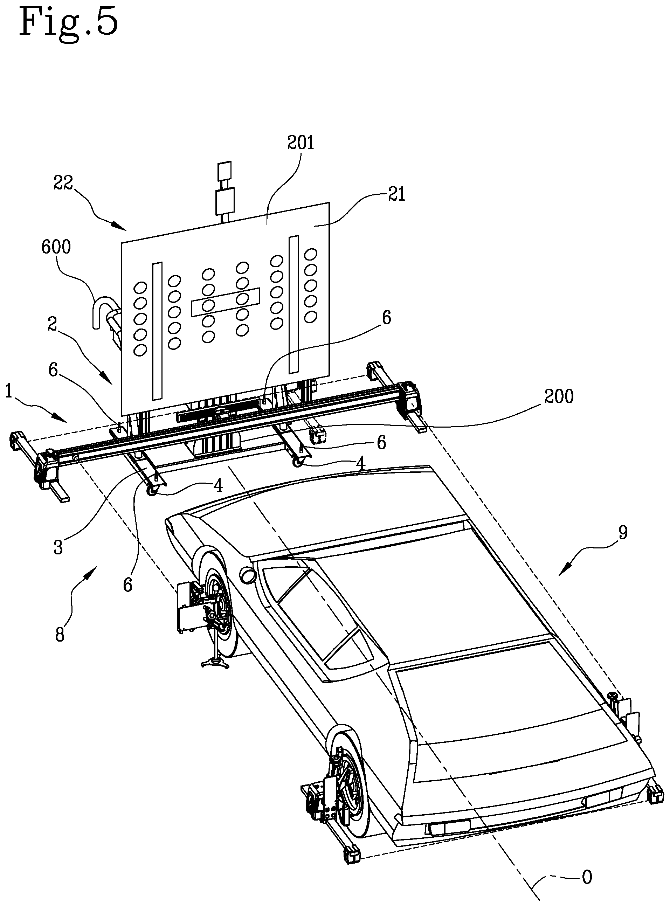

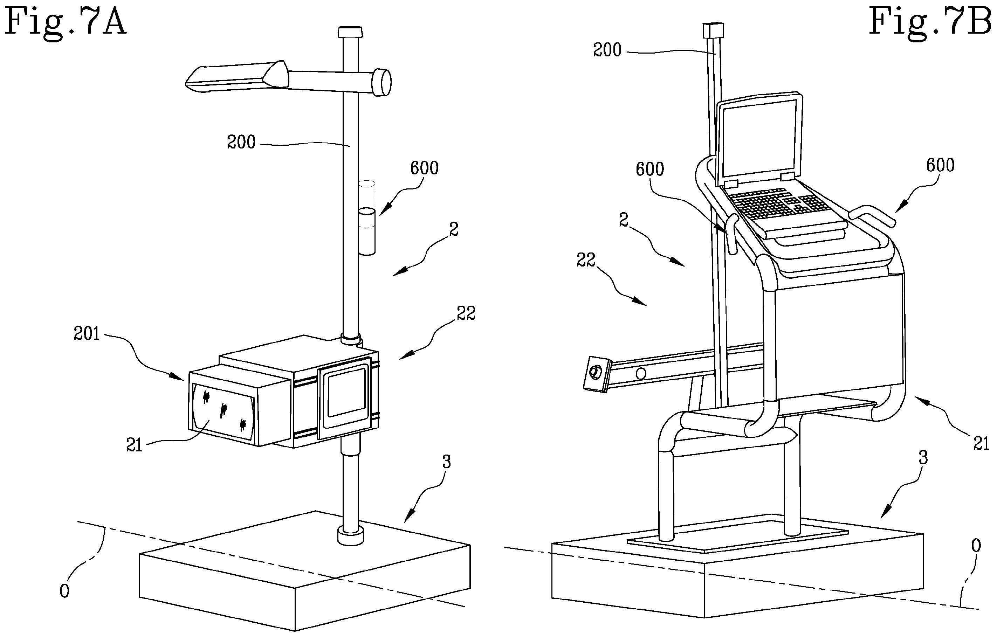

In an example, the locking device 6 comprises a plurality of pins 61. In this example, each pin 61 is movable between a locked position and an unlocked position. At the locked position, the pin 61 is configured to act on the second portion 52 of the foot 5 to lock the wheel 4. In another example, one or more pins 61 are removable, that is to say, extractable manually by a user, and insertable manually as chosen by the user. The pin 61 is a quick and practical way of locking the wheel 4 to stop it rotating by mechanically obstructing the rotation of the foot 5 of the wheel 4. In an example, the locking device 6 is connected to a connecting device 600. In an example, the pins 61 are connected to the connecting device 600. Preferably, the connecting device 600 is connected to the structure 2. In an example, the connecting device 600 is operable manually. The connecting device 600 is configured to lower and lift the pins 61, moving them between the locked position and the unlocked position. In an example, the connecting device 600 comprises a handle. Figures 5, 7A and 7B should be noted, for example. In an example, the vehicle service structure 2 comprises a manoeuvring means, configured to be grippable by the user to move the structure 2 by making it run on the wheels 4 of the trolley. Still more preferably, the connecting device 600 is connected to the manoeuvring means. In an example, the connecting device 600 includes two handles, each grippable by the user with one hand. Alternatively, the connecting device 600 includes a slider, which runs on the structure. In an example, the second portion 52 of the foot comprises a protrusion, which has a seat 520. At the locked position, the pin 61 is configured to be inserted vertically into the seat 520. In an example, the base unit 3 comprises a plurality of openings. Each pin comprises an upper portion 610 and a lower portion 620, comprising a central tooth 621 and a lateral shoulder 622. Each pin 61 is insertable vertically into a respective opening in the base unit 3 and comes into abutment against the seat 520. In an example, the lateral shoulder 622 abuts against the protrusion 520. In an example, the protrusion 520 comprises a lateral portion which is inclined downwards. In this example, the pin 61 is configured to slide on the lateral portion so as to move between the locked position and the unlocked position.

In an example, the structure 2 comprises one or more of the following service systems for the vehicle 9:
- a system for measuring vehicle alignment;
- an ADAS calibration system;
- a headlight testing system.

In an example, the structure 2 includes a vertical post 200 (i.e. parallel to the vertical axis Z), connected to the base unit 3 and protruding vertically from the base unit 3. In an example, the base unit 3 has an upper surface comprising a first upper portion and a second upper portion. The first upper portion defines a first base plane, parallel to the ground and distal from the ground of a first distance. The second upper portion defines a second base plane, parallel to the ground and distal from the ground of a second distance. The first upper portion is configured for receiving the wheels. The second upper portion is configured for receiving a lower end of the vertical post 200 (i.e. the post 200 is connected to the base unit 3 in the second upper portion of the base unit 3). In said example, the second distance is lower than the first distance, so that the lower end of the post 200 is closer to the ground with respect to the first upper portion. This solution advantageously permits to lower the center of mass of the apparatus, facilitating its movement on the ground through the wheels.

In an example, the structure 2 comprises an assisting device 201. In dependence of the typology of the vehicle service system, the assisting device 201 may be:
- a horizontal bar provided with two cameras, for the system for measuring vehicle alignment;
- a calibration panel or a calibration mirror, for the ADAS calibration system;
- an optic group, for the headlight testing system.

The assisting device 201 may also include other features according to the known solutions in the technical field of service apparatus for vehicles.

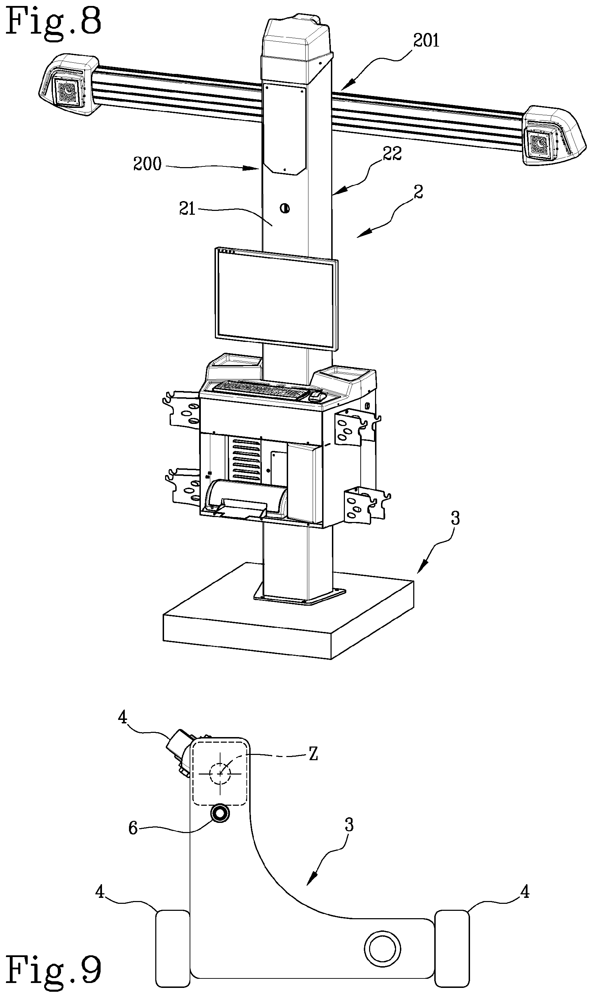

In an example, the assisting device 201 is connected to the vertical post 200, and is configured to slide on the vertical post 200 to move along the vertical direction. The assisting device 201 may also include a carriage, for facilitating the sliding on the vertical post 200. The carriage may be movable on the post through a motor, a worm screw, a belt, a rack, ecc. In an example, the trolley comprises three wheels 4, where the respective horizontal axis of rotation of a first and a second wheel are aligned, and where the third wheel 4 is a pivoting wheel. For non-limiting exemplary purpose, attention is drawn to the trolley shown in Figure 9. Preferably, this solution is applicable to headlight aligner systems. In effect, someone using these systems has to rotate the trolley in the working plane. In the absence of a single pivoting wheel, the user would have to raise the trolley and turn it while supporting its weight on one of the non-pivoting wheels. Thus, two non-pivoting wheels and a single pivoting wheel is a particularly advantageous configuration to overcome this problem.

In this example, the pivoting wheel may be locked at the external position PE or at the internal position PI.

Preferably, the system for measuring vehicle alignment and/or the ADAS calibration system are provided with a trolley comprising four wheel 4, at least two of which are pivoting wheels. Preferably, the headlight testing system may be provided with a trolley comprising three wheels 4, of which at least one is a pivoting wheel. Alternatively, the headlight testing system may be provided with a trolley comprising four wheels 4, of which at least two are pivoting wheels. According to an aspect of it, this disclosure provides a method for positioning a service apparatus 1 for a vehicle 9. The method comprises the following steps:
- providing a structure 2 comprising a first face 21 and a second face 22. The second face 22 is opposite the first face 21 relative to an operating direction O;
- providing a base unit 3, which supports the structure 2, and a plurality of wheels 4, one or more of which are pivoting wheels, associated with the base unit 3 to form therewith a trolley which is movable on a floor;
- via a locking device 6, locking the one or more pivoting wheels 4 to stop their rotational motion about respective vertical axes Z;
- moving the apparatus 1 along the operating direction O, with the pivoting wheels locked, so that the trolley is movable only along the operating direction.

In an example, the apparatus comprises one or more feet 5. Each foot 5 of the one or more feet is connected to a respective wheel 4 of the one or more pivoting wheels. Each foot of the one or more feet comprises a first portion 51, hinged to the base unit 3 to rotate about the vertical axis Z, and a second portion 52, connected to the wheel 4 to rotate about a horizontal axis X.

In an example, in the step of locking, the locking device 6 acts on the second portion 52 of the foot 5 of at least two wheels 4. Preferably, the locking device 6 acts on each pivoting wheel 4. In an example, at least one of the plurality of feet 5 is movable between an internally aligned position PI and an externally aligned position. Preferably, each of the plurality of feet 5 is movable between an internally aligned position PI and an externally aligned position PE. In this example, the locking device 6 locks the foot at the internally aligned position PI. In an example, the apparatus comprises a first pair of wheels and/or a second pair of wheels. The method comprises a first step of moving the apparatus 1 along the operating direction O in a first sense. For example, the first sense may be towards or away from the vehicle 9. Preferably, the first sense is directed from the first face 21 to the second face 22. Alternatively, the first sense is directed from the second face 22 to the first face 21. The method comprises a step of locking the wheels of the one whose feet 5, between those of the pair of front wheels and those of the pair of rear wheels, are at the internally aligned position PI. In an example, the method comprises a second step of moving the apparatus 1 along the operating direction O in a second sense, opposite of the first sense. In this example, the method comprises a step of locking the wheels of the other pair of wheel whose feet 5, between those of the first pair of wheels and those of the second pair of wheels, have also adopted the internally aligned position PI. In an example, for each wheel 4 to be locked, locking includes inserting a pin 61 into a though opening made in the base unit 3.

## Claims

1. A service apparatus (1) for a vehicle (9), the vehicle (9) being positioned in a working area (8), comprising:
- a structure (2) configured to assist a user in performing service operations on the vehicle (9), and having a first face (21) and a second face (22), opposite the first face (21) relative to an operating direction (O);
- a base unit (3) which supports the structure (2);
- a plurality of wheels (4) associated with the base unit (3) to form therewith a trolley which is movable on a floor, wherein one or more of the plurality of wheels (4) are rotatable about a respective horizontal axis (X), so as to roll on the floor, and are movable by rotation about a respective vertical axis (Z), to be pivotable relative to the base (3) so that the trolley can move in any direction parallel to the floor,
**characterized in that** it comprises a locking device (6) configured to lock said one or more pivoting wheels to stop their rotational motion about the respective vertical axes (Z) so that they are constrained to roll on the floor along the operating direction (O) and so that the trolley can move only along the operating direction (O).

2. The apparatus (1) according to claim 1, comprising one or more feet (5), each of the one or more feet (5) being connected to a respective wheel of said one or more pivoting wheels, and comprising a first portion (51), hinged to the base unit (3) to rotate about the vertical axis (Z), and a second portion (52), connected to the wheel (4) so the wheel can rotate about the horizontal axis (X), and wherein, for each foot (5),
the horizontal axis (X) is spaced from the vertical axis (Z) so that as the foot (5) rotates about the vertical axis (Z), a centre of the wheel (4) describes a circle around the vertical axis (Z), and wherein
the locking device (6) is configured to act on the second portion (52) of the foot (5).

3. The apparatus according to claim 2, wherein each foot (5) of the one or more feet (5) is movable between an internally aligned position (PI) and an externally aligned position (PE), opposite each other relative to the operating direction (O), wherein the internally aligned position (PI) is proximal to a centre of the base unit (3) and the externally aligned position (PE) is distal to the centre of the base unit, and wherein the locking device (6) is configured to lock the foot (5) at the internally aligned position (PI) or at the externally aligned position (PE).

4. The apparatus (1) according to claim 3, wherein the plurality of wheels (4) includes a first pair of wheels, located at the first face and/or a second pair of wheels, located at the second face, and wherein, for each wheel (4), the locking device (6) is configured to lock the foot (5) at the internally aligned position (PI).

5. The apparatus (1) according to claim 4, wherein the locking device (6) is configured to lock each wheel (4) selectively, so that each wheel (4) can be locked independently of the other wheels (4).

6. The apparatus (1) according to any of the claims from 2 to 5, wherein the locking device (6) comprises a plurality of pins (61), each pin (61) being movable between a locked position and an unlocked position, and wherein, at the locked position, the pin (61) is configured to act on the second portion (52) of the foot (5) to lock the wheel (4).

7. The apparatus according to claim 6, wherein the second portion (52) of the foot (5) comprises a protrusion, which has a seat (520), and wherein, at the locked position, the pin (61) is configured to be inserted vertically into the seat (520).

8. The apparatus (1) according to claim 7, wherein the base unit (3) comprises a plurality of openings, and wherein each pin (61) comprises an upper portion (610) and a lower portion (620), the lower portion (620) including a central tooth (621) and a lateral shoulder (622), each pin (61) being insertable vertically into a respective opening in the base unit so that the central tooth (621) is inserted into the seat (520), and the lateral shoulder (622) is abutted against the protrusion.

9. The apparatus (1) according to claim 7 or 8, wherein the protrusion comprises a lateral portion, inclined downwards, wherein the pin (61) is configured to slide on the protrusion so as to move between the locked position and the unlocked position.

10. The apparatus (1) according to any one of the preceding claims, wherein the structure (2) comprises one or more of the following vehicle service systems:
- a system for measuring vehicle alignment;
- an ADAS calibration system;
- a headlight testing system.

11. The apparatus (1) according to any one of the preceding claims, comprising a connecting device (600), connected to the structure (2) and being operable manually by a user, the connecting device (600) being configured to operate the locking device (6) to lock or unlock the rotation of one or more wheels (4) about the respective vertical axes (Z).

12. A method for positioning a service apparatus (1) for a vehicle (9), the vehicle being positioned in a working area (8), wherein the method comprises the following steps:
- providing a structure (2) having a first face (21) and a second face (22), opposite the first face (21) relative to an operating direction (O);
- providing a base unit (3) which supports the structure (2), and a plurality of wheels (4) associated with the base unit to form therewith a trolley which is movable on a floor. wherein one or more of the plurality of wheels (4) are rotatable about a respective horizontal axis (X), so as to roll on the floor, and are movable by rotation about a respective vertical axis (Z), to be pivotable relative to the base (3) so that the trolley can move in any direction parallel to the floor,
- via a locking device (6), locking said one or more pivoting wheels to stop their rotational motion about the respective vertical axes (Z) so they are constrained to roll on the floor along the operating direction (O);
- moving the apparatus along the operating direction (O), with the pivoting wheels locked, so that the trolley is movable only along the operating direction (O).

13. The method according to claim 12, wherein the apparatus (1) comprises one or more feet, each of said one or more feet being connected to a respective wheel of said one or more pivoting wheels, and comprising a first portion (51), hinged to the base unit (3) to rotate about the vertical axis (Z), and a second portion (52), connected to the wheel (4) to rotate about the horizontal axis (X), and wherein, the horizontal axis (X) is spaced from the vertical axis (Z) so that during rotation about the vertical axis (Z), a centre (C) of the wheel (4) describes a circle about the vertical axis (Z), and wherein, in the step of locking, the locking device (6) acts on the second portion (52) of the foot (5) of at least one wheel (4).

14. The method according to claim 13, wherein at least one foot (5) of the plurality of feet (5) is movable between an internally aligned position (PI) and an externally aligned position (PE), opposite each other relative to the operating direction (O), wherein the internally aligned position (PI) is proximal to a centre of the base unit (3) and the externally aligned position (PE) is distal to the centre of the base unit (3), and wherein, in the step of locking, the locking device (6) locks the foot (5) at the internally aligned position (PI).

15. The method according to claim 14, wherein the apparatus (1) comprises a first pair of wheels (4) and/or a second pair of wheels (4), the method including the following steps:
- a first step of moving the apparatus along the operating direction (O) in a first sense, the first sense being directed from the first face to the second face or from the second face to the first face;
- locking the wheels of the one pair of wheels whose feet (5), between those of the pair of front wheels and those of the pair of rear wheels, are at the internally aligned position (PI).

16. The method according to claim 15, further comprising the following steps:
- a second step of moving the apparatus along the operating direction (O) in a second sense, opposite of the first sense;
- locking at least one other wheel (4) whose foot (5) has also adopted the internally aligned position (PI).

17. The method according to any one of claims 13 to 16, wherein for each wheel to be locked, locking includes inserting a pin into a though opening made in the base unit, so that at a locked position, a lower portion of the pin interacts with the second portion (52) of the corresponding foot, to lock it, and comprising a step of unlocking by extracting the pin from the opening.
